(19) **Europäisches Patentamt / European Patent Office / Office européen des brevets**

(11) **EP 3 865 241 B1**

(12) **EUROPEAN PATENT SPECIFICATION**

(45) Date of publication and mention
of the grant of the patent:
**19.06.2024 Bulletin 2024/25**

(21) Application number: **21152682.7**

(22) Date of filing: **21.01.2021**

(51) International Patent Classification (IPC):
**B23K 9/10** *(2006.01)*        **B23K 9/095** *(2006.01)*
**B23K 9/073** *(2006.01)*

(52) Cooperative Patent Classification (CPC):
**B23K 9/1062; B23K 9/0731; B23K 9/0738;**
**B23K 9/0953; B23K 9/1006; B23K 9/1056**

(54) **SYSTEMS AND METHODS TO CONTROL WELDING PROCESSES USING A VOLTAGE-CONTROLLED CONTROL LOOP**

SYSTEME UND VERFAHREN ZUR STEUERUNG VON SCHWEISSVERFAHREN UNTER VERWENDUNG EINES SPANNUNGSGESTEUERTEN REGELKREISES

SYSTÈMES ET PROCÉDÉS POUR CONTRÔLER DES PROCESSUS DE SOUDAGE À L'AIDE D'UNE BOUCLE DE COMMANDE À TENSION CONTRÔLÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.01.2020 US 202016776649**

(43) Date of publication of application:
**18.08.2021 Bulletin 2021/33**

(73) Proprietor: **Illinois Tool Works INC.**
**Glenview, IL 60025 (US)**

(72) Inventors:
• **DURIK, Justin**
  **Glenview, IL 60025 (US)**
• **DAVIDSON, Robert R.**
  **Glenview, IL 60025 (US)**

(74) Representative: **HGF**
**HGF Limited**
**1 City Walk**
**Leeds LS11 9DX (GB)**

(56) References cited:
**US-A1- 2008 223 840     US-A1- 2019 388 992**

EP 3 865 241 B1

**Description**

BACKGROUND

This present invention relates generally to welding systems and, more particularly, to a welding-type power supply, to a method to control a welding-type power supply, and to a non-transitory machine readable storage medium.

Welding-type components (e.g., welding torches) are sometimes powered by welding-type power supplies. Conventional power supplies use a range of electrical components and/or electrical circuitry to produce appropriate welding-type power for various welding-type operations and/or welding-type components.

Conventional short circuit gas metal arc welding (GMAW), also referred to as metal inert gas (MIG) welding, is a welding process in which an electric arc forms between an electrode and pieces of metal that are to be welded. The electric arc generates heat that causes the pieces of metal to melt. Upon cooling down of the melted pieces of metal, the pieces of metal join and form a weld. Electrical and/or physical parameters can be adjusted to give the best electric arc possible and improve the overall welding process.

US 2019388992A1 (describing the preamble of claims 1 and 13 respectively) discloses a welding regime which implements cyclic short circuits under a closed loop voltage control approach. Upon clearing or imminent clearing of the short circuit, a current recess is implemented.

US 20080223840A1 discloses a squeezing detection control method for consumable electrode arc welding.

SUMMARY

A welding-type power supply, a method to control a welding-type power supply, and a non-transitory machine readable storage medium according to the present invention are defined in claims 1, 13 and 14 respectively.

Further preferred embodiments are defined in the dependent claims.

BRIEF DESCRIPTION OF THE DRAWINGS

FIG. 1 is an illustration of an example welding-type system in accordance with aspects of this disclosure.

FIG. 2 is a graph illustrating example voltages and currents in the system of FIG. 1 before, during, and after a short circuit event of a voltage-controlled welding process, in accordance with aspects of this disclosure.

FIG. 3 is a graph illustrating voltage and current measurements during an example short circuit clearing process performed in accordance with aspects of this disclosure.

FIG. 4 is a graph illustrating voltage and current measurements during an example short circuit clearing process performed in accordance with a conventional short circuit welding process.

FIG. 5 is a graph illustrating voltage and current measurements during an example short circuit clearing process having an extended short circuit duration and performed in accordance with aspects of this disclosure.

FIG. 6 is a graph illustrating voltage and current measurements during an example short circuit clearing process having an extended short circuit duration and performed in accordance with a conventional short circuit welding process.

FIG. 7 is a flowchart representative of example machine readable instructions which may be executed by the example welding-type power supply of FIG. 1 to control a voltage-controlled welding-type process, including detecting and clearing short-circuit conditions using a voltage-controlled control loop.

FIGS. 8A and 8B illustrate a flowchart representative of example machine readable instructions which may be executed by the example welding-type power supply of FIG. 1 to clear a short circuit event during a voltage-controlled welding-type process.

The figures are not necessarily to scale. Where appropriate, similar or identical reference numbers are used to refer to similar or identical components.

DETAILED DESCRIPTION

Conventional gas metal arc welding (GMAW) systems operate using voltage-controlled control loops. Voltage-controlled control loops operate based on Equation 1 below, which can be rearranged as shown in Equation 2 below:

$$\text{Voltage Error} = \text{(Inductance)} * \text{(Current Change)/(Current adjustment time)}$$

$$\text{(Equation 1)}$$

$$\text{Current Change} = \text{(Voltage Error} * \text{Current adjustment time)/(Inductance)}$$

$$\text{(Equation 2)}$$

When implemented in a welding system, the control logic may be implemented as shown in Equation 3 below:

$$\text{Voltage Error} = \text{(Modified User Voltage Command)} - \text{(Measured Voltage)}$$

$$\text{(Equation 3)}$$

The implementation of Equation 3 in a control loop generates a relatively linear response to a short circuit in the weld circuit in conventional welding systems. Because current adjustment time is typically constant and inductance is also constant, the implementation of Equation 3 allows the current to increase to very high levels prior to clearing the short. The amount of spatter generated by clearing a short circuit increases as the current at the time of clearing the short increases.

To prevent the current from ramping linearly to a high current level, a particular control parameter referred to herein as "slope" may be added to the equation. The slope parameter specifies the adjustment to a commanded output voltage of the voltage-controlled control loop per unit of output current, to reduce the output voltage by a higher amount per unit of output current. The slope parameter is in units of volts/amp, with example values between -1V/100A (e.g., lower range of an upper limit on output current) and -5V/100A (e.g., higher range of the upper limit on output current). A typical slope for GMAW is in the range of 2-5 volts/100 amps. The slope parameter could specify an adjustment or offset to the observed voltage error in the voltage-controlled control loop (e.g., the difference between the commanded output voltage and the actual output voltage) that is dependent on the output current.

The slope modifies Equation 3 by reducing the voltage error as the current increases, as reflected in Equation 4 below:

$$\text{Modified User Voltage Command} = \text{User Voltage Command} - \text{(Measured Current} *$$

$$\text{Slope/100 amps)}$$

$$\text{(Equation 4)}$$

The result of implementing Equation 4 in the welding system is to roll off the amount of voltage error and, as a result, the current response to the actual voltage error. Other equations in the GMAW control process may be used to compensate for average voltage and/or for the effect of slope on the average voltage of a GMAW welding process.

Disclosed systems and methods maintain weld operator and/or weld engineer familiarity with the short circuit GMAW and/or user controls, as well as maintain the stability and simplicity of the conventional GMAW control loop. Disclosed systems and methods provide a short circuit process that results in lower spatter by clearing short circuits at a lower current, providing little to no energy to create spatter and minimal energy to any spatter generated, thereby reducing grinding and/or other non-welding time. In disclosed example systems and methods, the welding control loop adds a burst of energy towards the front end of the short circuit response in a GMAW process, which provides the majority of the energy involved in clearing the short circuit, and then decreases to a lower energy output to complete the short circuit clearing, using the simple and familiar voltage-controlled control loop processes of GMAW.As used herein, a voltage-controlled control loop refers to a control loop or control scheme in which a processor or other control circuitry controls one or more outputs to reduce an error or difference between an output voltage and a commanded output voltage. For example, control circuitry executing a voltage-controlled control loop may be configured to set a commanded output voltage of the voltage-controlled control loop to be equal to the voltage command, and adjust one or more parameters or variables controlled by the control loop to reduce an error or difference between a voltage feedback to the voltage-controlled control loop and the commanded output voltage.

As used herein, the term "welding-type power" refers to power suitable for welding, plasma cutting, induction heating, CAC-A and/or hot wire welding/preheating (including laser welding and laser cladding). As used herein, the term "welding-type power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a "weld voltage setpoint" refers to a voltage input to the power converter via a user interface, network communication, weld procedure specification, or other selection method.

As used herein, a "circuit" includes any analog and/or digital components, power and/or control elements, such as a microprocessor, digital signal processor (DSP), software, and the like, discrete and/or integrated components, or portions and/or combinations thereof.

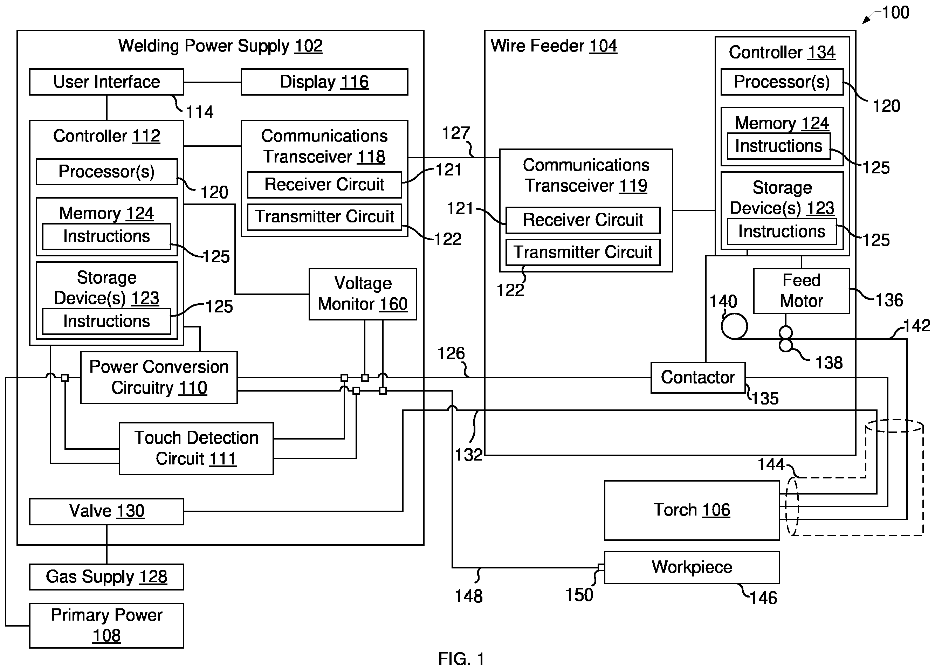

Turning now to the drawings, FIG. 1 is a block diagram of an example welding system 100 having a welding-type power supply 102, a wire feeder 104, and a welding torch 106. The welding system 100 powers, controls, and supplies consumables to a welding application. In some examples, the power supply 102 directly supplies input power to the welding torch 106. The welding torch 106 may be a torch configured for shielded metal arc welding (SMAW, or stick welding), tungsten inert gas (TIG) welding, gas metal arc welding (GMAW), flux cored arc welding (FCAW), based on the desired welding application. In the illustrated example, the power supply 102 is configured to supply power to the wire feeder 104, and the wire feeder 104 may be configured to route the input power to the welding torch 106. In addition to supplying an input power, the wire feeder 104 may supply a filler metal to a welding torch 106 for various welding applications (e.g., GMAW welding, flux core arc welding (FCAW)). While the example system 100 of FIG. 1 includes a wire feeder 104 (e.g., for GMAW or FCAW welding), the wire feeder 104 may be replaced by any other type of remote accessory device, such as a stick welding and/or TIG welding remote control interface that provides stick and/or TIG welding.

The power supply 102 receives primary power 108 (e.g., from the AC power grid, an engine/generator set, a battery, or other energy generating or storage devices, or a combination thereof), conditions the primary power, and provides an output power to one or more welding devices in accordance with demands of the system 100. The primary power 108 may be supplied from an offsite location (e.g., the primary power may originate from the power grid). The power supply 102 includes power conversion circuitry 110, which may include transformers, rectifiers, switches, and so forth, capable of converting the AC input power to AC and/or DC output power as dictated by the demands of the system 100 (e.g., particular welding processes and regimes). The power conversion circuitry 110 converts input power (e.g., the primary power 108) to welding-type power based on a weld voltage setpoint and outputs the welding-type power via a weld circuit.

In some examples, the power conversion circuitry 110 is configured to convert the primary power 108 to both welding-type power and auxiliary power outputs. However, in other examples, the power conversion circuitry 110 is adapted to convert primary power only to a weld power output.

The power supply 102 includes a control circuitry 112 to control the operation of the power supply 102. The power supply 102 also includes a user interface 114. The control circuitry 112, which is also referred to as "control circuitry," receives input from the user interface 114, through which a user may choose a process and/or input desired parameters (e.g., voltages, currents, particular pulsed or non-pulsed welding regimes, and so forth). The user interface 114 may receive inputs using any input device, such as via a keypad, keyboard, buttons, touch screen, voice activation system, wireless device, etc. Furthermore, the control circuitry 112 controls operating parameters based on input by the user as well as based on other current operating parameters. Specifically, the user interface 114 may include a display 116 for presenting, showing, or indicating, information to an operator.

The control circuitry 112 may also include interface circuitry for communicating data to other devices in the system 100, such as the wire feeder 104. For example, in some situations, the power supply 102 wirelessly communicates with other welding devices within the welding system 100. Further, in some situations, the power supply 102 communicates with other welding devices using a wired connection, such as by using a network interface controller (NIC) to communicate data via a network (e.g., ETHERNET, 10baseT, 10base100, etc.). In the example of FIG. 1, the control circuitry 112 communicates with the wire feeder 104 via the weld circuit via a communications transceiver 118, as described below.

The control circuitry 112 includes at least one controller or processor 120 that controls the operations of the power supply 102. The control circuitry 112 receives and processes multiple inputs associated with the performance and demands of the system 100. The processor 120 may include one or more microprocessors, such as one or more "general-purpose" microprocessors, one or more special-purpose microprocessors and/or ASICS, and/or any other type of processing device. For example, the processor 120 may include one or more digital signal processors (DSPs).

The control circuitry 112 controls the power conversion circuitry 110 to convert the primary power 108 to output the welding-type power based on a voltage-controlled control loop and one or more control parameters of the control loop. Example control parameters include a voltage command, a slope parameter that specifies the adjustment to a commanded output voltage of the voltage-controlled control loop per unit of output current, an upper limit on a rate of change of output current per unit time, and/or an upper limit on an output current by the power conversion circuitry. The voltage-controlled control loop may be implemented as a feedback loop in which the control circuitry 112 controls the power conversion circuitry 110 to increase and/or decrease the output current and/or output voltage (e.g., by controlling switching elements in a switched mode power supply of the power conversion circuitry 110) while monitoring the output voltage (e.g., via the voltage monitor 160), to minimize the error between a target voltage or commanded output voltage and the actual output voltage of the power conversion circuitry 110.

The example control circuitry 112 includes one or more storage device(s) 123 and one or more memory device(s) 124. The storage device(s) 123 (e.g., nonvolatile storage) may include ROM, flash memory, a hard drive, and/or any other suitable optical, magnetic, and/or solid-state storage medium, and/or a combination thereof. The storage device 123 stores data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124, along with code configured to provide a specific output (e.g., initiate wire feed, enable gas flow, capture welding current data, detect short circuit parameters, determine amount of spatter) during operation.

In some examples, the welding power flows from the power conversion circuitry 110 through a weld cable 126 to the wire feeder 104 and the welding torch 106. The example weld cable 126 is attachable and detachable from weld studs at each of the power supply 102 and the wire feeder 104 (e.g., to enable ease of replacement of the weld cable 126 in case of wear or damage). Furthermore, in some examples, welding data is provided with the weld cable 126 such that welding power and weld data are provided and transmitted together over the weld cable 126. The communications transceiver 118 may be communicatively coupled to the weld cable 126 to communicate (e.g., send/receive) data over the weld cable 126. The communications transceiver 118 may be implemented based on various types of power line communications methods and techniques. For example, the communications transceiver 118 may utilize IEEE standard P1901.2 to provide data communications over the weld cable 126. In this manner, the weld cable 126 may be utilized to provide welding power from the power supply 102 to the wire feeder 104 and the welding torch 106. Additionally or alternatively, a communication cable 127 may be used to transmit and/or receive data communications between the communications transceiver 118 and a similar communications transceiver 119 of the wire feeder 104.

The example communications transceiver 118 includes a receiver circuit 121 and a transmitter circuit 122. Generally, the receiver circuit 121 receives data transmitted by the wire feeder 104 and the transmitter circuit 122 transmits data to the wire feeder 104. In some examples, the receiver circuit 121 receives communication(s) via the weld circuit while weld current is flowing through the weld circuit (e.g., during a welding-type operation) and/or after the weld current has stopped flowing through the weld circuit (e.g., after a welding-type operation).

Example implementations of the communications transceiver 118 are described in U.S. Patent No. 9,012,807. However, other implementations of the communications transceiver 118 may be used.

The example wire feeder 104 also includes a communications transceiver 119, which may be similar or identical in construction and/or function as the communications transceiver 118.

The example power supply 102 includes a voltage monitor 160. The voltage monitor 160 monitors an output voltage from the welding power supply 102. The output voltage may be controlled by the power conversion circuitry 110, the touch detection circuitry 111, an external voltage source, current source, and/or load, and/or any other internal or external cause of voltage.

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the control circuitry 112 to enable, inhibit, or control gas flow (e.g., shielding gas) through the valve 130. Shielding gas exits the valve 130 and flows through a cable 132 (which in some implementations may be packaged with the welding power output) to the wire feeder 104 which provides the shielding gas to the welding application. In some examples, the welding system 100 does not include the gas supply 128, the valve 130, and/or the cable 132.

In some examples, the wire feeder 104 uses the welding power to power the various components in the wire feeder 104, such as to power a wire feeder controller 134. As noted above, the weld cable 126 may be configured to provide or supply the welding power. The power supply 102 may also communicate with a communications transceiver 119 of the wire feeder 104 using the weld cable 126 and the communications transceiver 118 disposed within the power supply 102. In some examples, the communications transceiver 119 is substantially similar to the communications transceiver 118 of the power supply 102. The wire feeder controller 134 controls the operations of the wire feeder 104.

In some examples, the wire feeder 104 uses the wire feeder controller 134 to detect whether the wire feeder 104 is in communication with the power supply 102 and to detect a current welding process of the power supply 102 if the wire feeder 104 is in communication with the power supply 102.

A contactor 135 (e.g., high amperage relay) is controlled by the wire feeder controller 134 and configured to enable or inhibit welding power to continue to flow to the weld cable 126 for the welding application. In some examples, the contactor 135 is an electromechanical device. However, the contactor 135 may be any other suitable device, such as a solid state device, and/or may be omitted when the power supply 102 is configured to control the output of welding-type power to the torch 106. The control circuitry 112 and/or the controller 134 may control the contactor 135 to close and/or open to provide power to the torch 106. The wire feeder 104 includes a feed motor 136 that receives control signals from the wire feeder controller 134 to drive rollers 138 that rotate to pull wire off a spool 140 of wire. The wire is provided to the welding application through a torch cable 142. Likewise, the wire feeder 104 may provide the shielding gas from the cable 132 through the cable 142. The wire electrode, the shield gas, and the power from the weld cable 126 are bundled together in a single torch cable 144 and/or individually provided to the welding torch 106.

The welding torch 106 delivers the wire, welding power, and/or shielding gas for a welding application. The welding torch 106 is used to establish a welding arc between the welding torch 106 and a workpiece 146. A work cable 148 couples the workpiece 146 to the power supply 102 (e.g., to the power conversion circuitry 110) to provide a return path for the weld current (e.g., as part of the weld circuit). The example work cable 148 attachable and/or detachable from the power supply 102 for ease of replacement of the work cable 148. The work cable 148 may be terminated with a clamp 150 (or another power connecting device), which couples the power supply 102 to the workpiece 146.

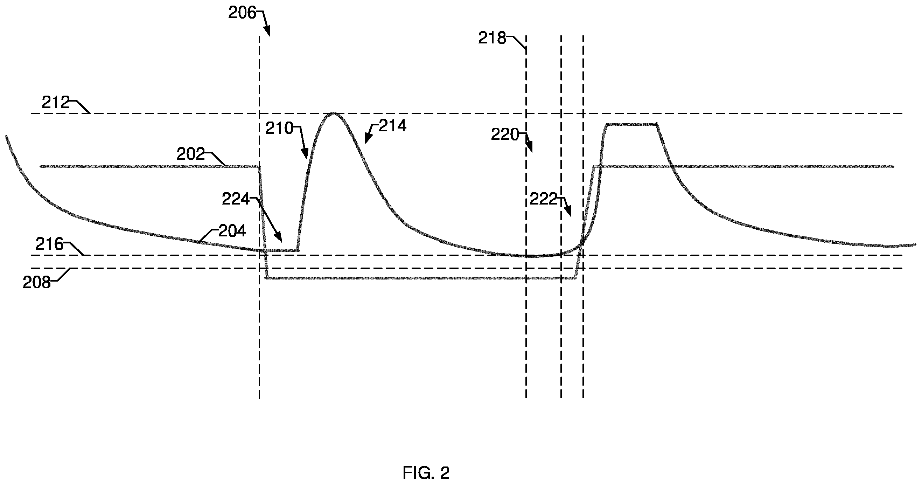

In operation, the example welding-type power supply 102 of FIG. 1 detects short-circuit conditions and adjusts control parameters used by the voltage-controlled control loop to clear the short-circuit condition (e.g., reestablish the arc) with substantially reduced spatter compared to conventional short-circuit clearing techniques. FIG. 2 is a graph illustrating example output voltage 202 and output current 204 in the system of FIG. 1 before, during, and after a short circuit event 206 of a voltage-controlled welding process. During the short circuit event 206, the control circuitry 112 controls the power conversion circuitry 110 using multiple states or phases of the short-circuit response.

The control circuitry 112 identifies the start of the short circuit event 206 by detecting that the output voltage 202 is less than a threshold output voltage 208. In response to detecting that the output voltage is less than the threshold voltage 208, the control circuitry 112 enters a peak short circuit response state 210, in which the control circuitry 112 controls the voltage-controlled control loop based on a first value of a control parameter of the voltage-controlled control loop to increase a response rate of the voltage-controlled control loop.

To increase the current response rate, the control circuitry 112 may adjust the value of a slope parameter, which specifies the adjustment to a commanded output voltage of the voltage-controlled control loop per unit of output current, to reduce the output voltage by a higher amount per unit of output current. For example, the slope parameter may be expressed as volts/amps, with example values between -1V/100A (e.g., lower upper limit on output current) and -5V/100A (e.g., higher upper limit on output current). In some examples, the slope parameter may specify an adjustment or offset to the observed voltage error in the voltage-controlled control loop (e.g., the difference between the commanded output voltage and the actual output voltage) that is dependent on the output current. Thus, as the output current increases, the observed voltage error in the voltage-controlled control loop is further reduced from the observed value, which causes the voltage-controlled control loop to adjust the output. The slope parameter may be used to set an upper limit on the output current in the voltage-controlled control loop.

Additionally or alternatively, to increase the current response rate, the control circuitry 112 may adjust the value of a voltage command to the voltage-controlled control loop. An increase in the voltage command may cause an increased voltage error in the voltage-controlled control loop and, thus, an increased current output by the voltage-controlled control loop when the current output is proportional to the voltage error.

Still another control parameter that may be used by the controller to increase the current response rate is an inductance parameter, which may be implemented as an upper limit on a rate of change of output current per unit time that simulates or models physical inductance in a welding-type output circuit. For example, decreasing the inductance parameter increases the upper limit on a rate of change of output current per unit time, and permits a more rapid current increase during the short-circuit condition. Still another control parameter that may be used by the controller to increase the current response rate is an upper limit on the output current by the power conversion circuitry 110. The control circuitry 112 may use one or more of the example control parameters, individually or as a combined value.

The control circuitry 112 controls the power conversion circuitry 110 in the peak short circuit response state 210 until an upper threshold output current 212 is reached and/or a threshold time is reached. The upper threshold output current 212 and/or the threshold time may be based on, for example, the durations of prior short circuit events.

Following the peak short circuit response state 210, the control circuitry 112 enters a current reduction state 214, in which the control circuitry 112 controls the voltage-controlled control loop based on a second value of the control parameter, in which the second value of the control parameter causes a reduction in energy output by the power conversion circuitry 110 relative to the peak short circuit response state 210. In combination, the control circuitry 112 controls the power conversion circuitry 110 in the peak short circuit response state 210 and the current reduction state 214, using the voltage-controlled control loop, to increase the output current of the power conversion circuitry 110 at least a threshold amount in less than a threshold time during a short circuit condition (e.g., in the peak short circuit response state 210) and to decrease the output current to reduce an amount of spatter occurring when the short circuit condition clears (e.g., in the current reduction state 214).

To reduce the energy output in the current reduction state 214, the example control circuitry 112 may repeatedly adjust the value of the control parameter during the current reduction state 214 to cause the voltage-controlled control loop to repeatedly reduce the energy output by the power conversion circuitry 110. For example, to reduce the energy output, the control circuitry 112 may adjust the slope parameter to effectively offset or adjust the voltage error, to thereby reduce the maximum current output by the power conversion circuitry 110 via the voltage-controlled control loop. Additionally or alternatively, the control circuitry 112 may directly reduce the commanded voltage in the voltage-controlled control loop and/or decrease the upper current limit.

The control circuitry 112 controls the power conversion circuitry 110 in the current reduction state 214 until an end of the current reduction state 214. The current reduction state 214 may end in response to the output current satisfying a lower threshold output current 216 (e.g., decreasing below the lower threshold output current 216) and/or in response to reaching a predicted time 218 at which the control circuitry 112 expects the short circuit to clear. The predicted time 218 may be based on the same prediction as the time used to end the peak short circuit response state 210. The predicted time 218 may be predicted by the control circuitry 112 based on, for example, a nominal short circuit clearance time, the control parameters used by the control circuitry 112 to control the power conversion circuitry 110, and/or the durations of one or more prior short circuit events (e.g., an average of two or more prior short circuit durations). In some examples, the control circuitry 112 determines a predicted short circuit duration and adjusts the prediction in response to observed short circuit durations.

If the short circuit is not cleared by the end of the current reduction state 214, the control circuitry 112 enters a low energy state 220 and sets the control parameter to a value to further reduce the energy output relative to the current reduction state 214. For example, the control circuitry 112 may control the same parameter, or a different parameter, as in the current reduction state 214 to further decrease the energy.

If the short circuit is still not cleared by the end of the low energy state 220, the control circuitry 112 enters an extended short state 222 in which the control circuitry 112 controls the power conversion circuitry 110 to increase the energy output until the short circuit is cleared or a timeout is reached. In some examples, the control circuitry 112 increases the energy output over time by incrementing or decrementing the operable control parameter(s) to the voltage-controlled control loop to achieve a target energy increase per unit time. In the example of FIG. 2, the short circuit condition is detected to be finished when the output voltage 202 is greater than the threshold voltage 208.

In some examples, prior to the peak short circuit response state 210, the control circuitry 112 enters a wetting state 224 for a time period leading up to the peak short circuit response state 210. During the wetting state 224, the control circuitry 112 controls the power conversion circuitry 110 to output the welding-type power based on a target current for a threshold wetting time period. The threshold wetting time period may be selected or predetermined to avoid responding to short circuits having brief durations (e.g., whisker shorts) that do not require a full short circuit response cycle to clear. Instead, the control circuitry 112 may control the voltage-controlled control loop to maintain the output current at the time the short circuit was detected. After the threshold wetting time period, the control circuitry 112 ends the wetting state 224 and enters the peak short circuit response state 210 if the output voltage is still less than the threshold voltage 208. In some other examples, the wetting state 224 may be omitted and the control circuitry 112 responds to the detection of the short circuit condition by entering the peak short circuit response state 210.

At any time during the short circuit event (e.g., during any of the states 210, 214, 220, 222, 224), the short circuit condition may be cleared and the output voltage 202 increases above the threshold voltage 208 as the arc is reestablished. When the short circuit event 206 is ended and the arc is reestablished, the control circuitry 112 ends the current state and reverts the values of any control parameters of the voltage-controlled control loop that were modified during the short circuit event 206 to values corresponding to the arc state (e.g., the values of the control parameters that were used prior to the short circuit event). The control circuitry 112 repeats the states in response to subsequent short circuit events.

In some examples, the control circuitry 112 may adjust one or more control parameters in response to a comparison of the expected or estimated short circuit duration to the observed short circuit duration. The values of control parameter(s) for either the arc state or the short circuit state may be adjusted to reduce the probability and/or frequency of occurrence of the short circuit events and/or to improve the time required to clear short circuit events (e.g., reducing the time to clear short circuits, modifying the short circuit states 210, 214, 220, 222, 224 to better align the low current and/or low energy portions with the moment that the short circuit clears, etc.).

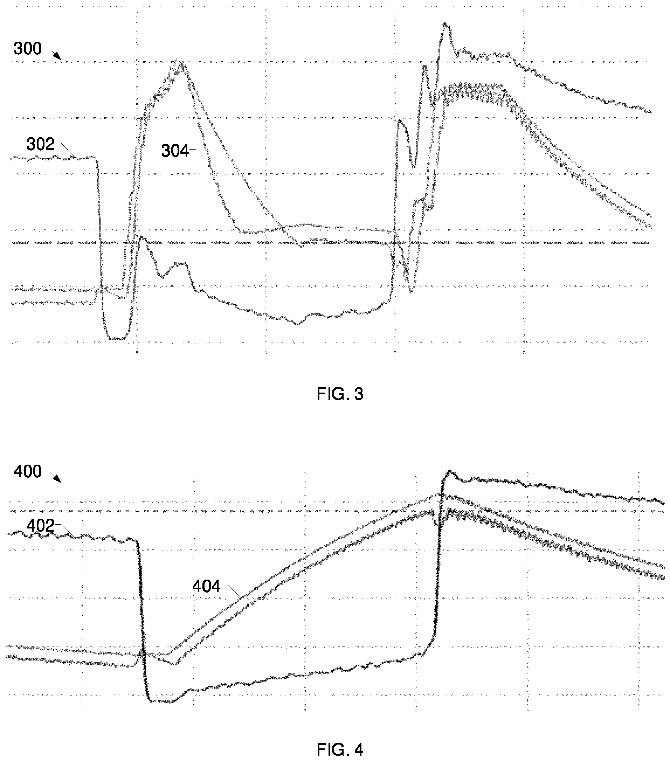

FIG. 3 is a graph illustrating voltage and current measurements during an example short circuit clearing process 300 performed in accordance with aspects of this disclosure. The graph of FIG. 3 shows an example voltage trace 302 and an example current trace 304. FIG. 4 is a graph illustrating voltage and current measurements during an example short circuit clearing process 400 performed in accordance with a conventional short circuit welding process. The graph of FIG. 4 shows an example voltage trace 402 and an example current trace 404.

The example short circuit clearing process 300 and the conventional process 400 were both performed using a target arc voltage of 15.5 volts and a target wire feed speed of 200 inches per minute (ipm). The short circuit clearing process 300 had an observed output range of 15.7-15.9 volts (V) and 89 Amperes (A) during the arc. The short circuit clearing process 300 had an observed output range of approximately 15.5V and 98A during the arc. As shown in the results of FIGS. 3 and 4, the disclosed example short circuit clearing process 300 cleared the short circuit at approximately 95A, which is substantially less than the conventional process 400 which cleared the short circuit at approximately 201A.

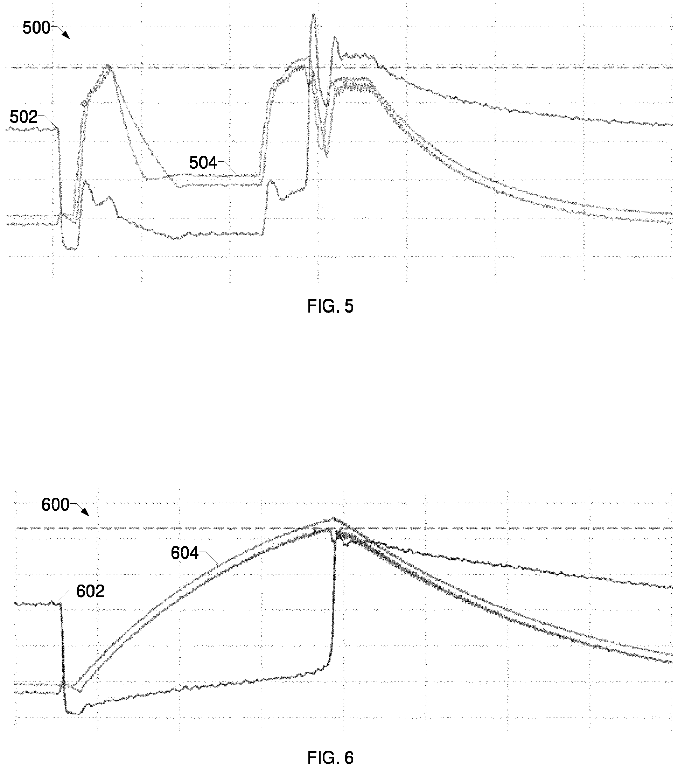

FIG. 5 is a graph illustrating voltage and current measurements during an example short circuit clearing process 500 having an extended short circuit duration and performed in accordance with aspects of this disclosure. The graph of FIG. 5 shows an example voltage trace 502 and an example current trace 504. FIG. 6 is a graph illustrating voltage and current measurements during an example short circuit clearing process 600 having an extended short circuit duration and performed in accordance with a conventional short circuit welding process. The graph of FIG. 6 shows an example voltage trace 602 and an example current trace 604.

The example short circuit clearing process 500 and the conventional process 600 were both performed using a target arc voltage of 15.5 volts and a target wire feed speed of 200 inches per minute (ipm). As shown in the results of FIGS. 5 and 6, the disclosed example short circuit clearing process 500 cleared the extended short circuit at approximately 246A, which is substantially less than the conventional process 600 which cleared the short circuit at approximately 267A.

As illustrated by the results in FIGS. 3-6, disclosed systems and methods clear both typical and extended short circuits at lower current and lower energy, which significantly reduces the amount spatter generated by the disclosed example welding processes relative to the conventional welding process.

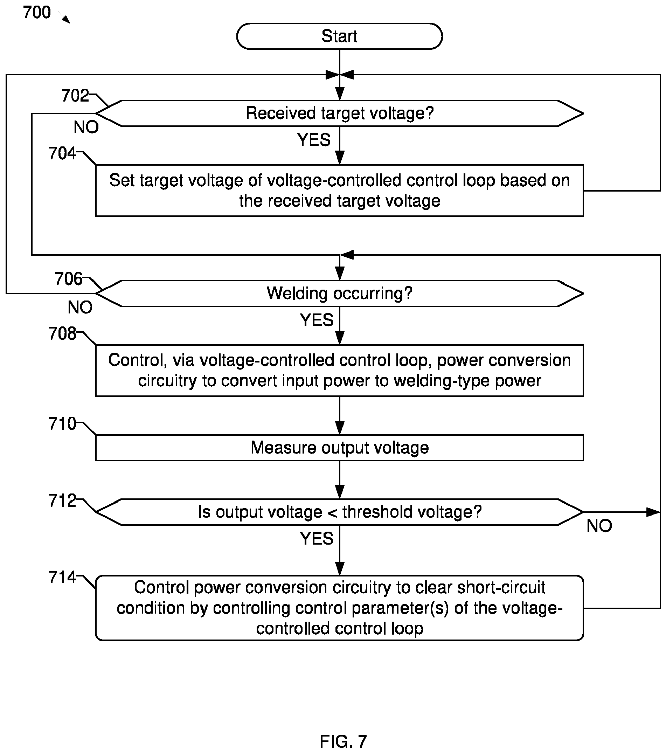

FIG. 7 is a flowchart representative of example machine readable instructions 700 which may be executed by the example welding-type power supply 102 of FIG. 1 to control a voltage-controlled welding-type process, including detecting and clearing short-circuit conditions using a voltage-controlled control loop. The example instructions 700 may be performed by the control circuitry 112 and/or the processor 120 of FIG. 1 to reduce the amount of spatter generated as a result of short circuits in the welding-type process while continuing to use the voltage-controlled control loop during both arc conditions and short circuit conditions.

At block 702, the control circuitry 112 determines whether a target voltage has been received. For example, the control circuitry 112 may determine whether a target voltage specifying the arc voltage intended by the operator, has been received via the user interface 114 and/or via the communications transceiver 118. If a target voltage has been received (block 702), at block 704 the control circuitry 112 sets a target voltage of a voltage-controlled control loop (e.g., an input voltage, a commanded voltage, etc.) based on the received target voltage. Control then returns to block 702.

If a target voltage has not been received (block 702), at block 706 the control circuitry 112 determines whether welding is occurring. For example, the control circuitry 112 may determine whether a trigger signal (from a manual or robotic welding torch) is present to indicate that the operator and/or robotic system intends to weld. If welding is not occurring (block 706), control returns to block 702 to await a further input or a start of welding.

If welding is occurring (block 706), at block 708 the control circuitry 112 controls the power conversion circuitry 110 via an voltage-controlled control loop to convert input power to welding-type power, and to output the welding-type power to a weld circuit. For example, the control circuitry 112 may control a switched mode power supply in the power conversion circuitry 110 to output current according to a target voltage, and adjust control of the switched mode power supply to increase or decrease the output current in response to a comparison of voltage feedback to the target voltage of the voltage-controlled control loop.

At block 710, the voltage monitor 160 measures an output voltage of the power conversion circuitry 110. The voltage monitor 160 may repeatedly or continuously measure (e.g., sample) the output voltage during the welding process to provide voltage feedback to the control circuitry 112 in support of the voltage-controlled control loop.

At block 712, the control circuitry 112 determines whether the output voltage is less than a threshold voltage. For example, the control circuitry 112 may compare the output voltage 302 of FIG. 3 to the threshold output voltage 308 to determine whether a short circuit condition exists. If the output voltage is greater than (or greater than or equal to) a threshold voltage (block 712), control returns to block 706 to determine whether welding is still occurring.

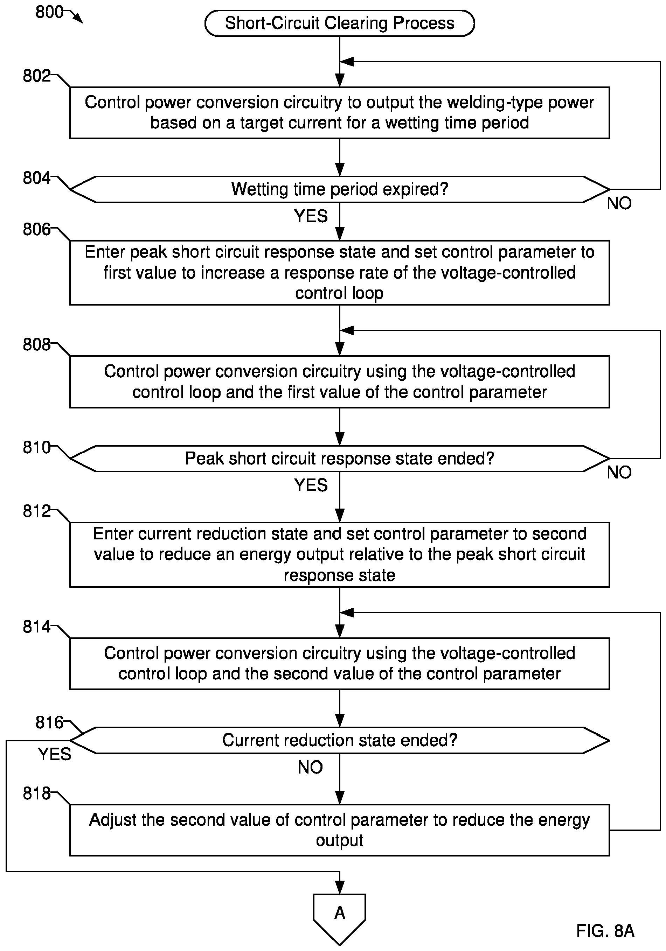

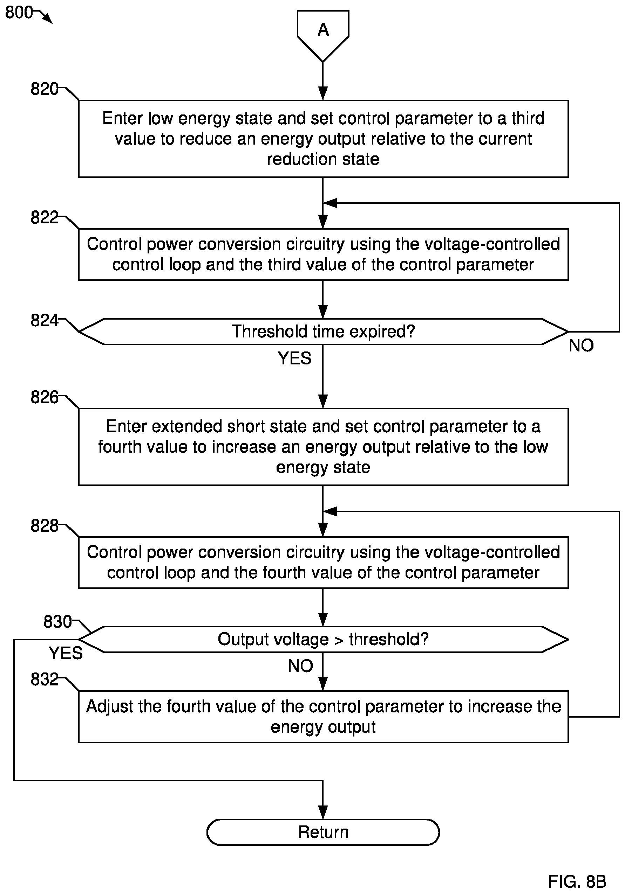

If the output voltage is less than the threshold voltage (block 712), the control circuitry 112 controls the power conversion circuitry 110 to clear the short-circuit condition by controlling one or more control parameters of the voltage-controlled control loop. The control circuitry 112 controls the power conversion circuitry 110 via the voltage-controlled control loop to increase an output current of the power conversion circuitry 110 at least a threshold amount in less than a threshold time to reduce the time required to clear the short circuit condition, and then decrease the output current to reduce an amount of spatter occurring when the short circuit condition clears. Example instructions that may be used to implement block 714 are disclosed below with reference to FIGS. 8A and 8B.

After clearing the short circuit (block 714), control returns to block 706 to determine whether welding is still occurring.

FIGS. 8A and 8B illustrate a flowchart representative of example machine readable instructions 800 which may be executed by the example welding-type power supply 102 of FIG. 1 to clear a short circuit event during a voltage-controlled welding-type process. The example control circuitry 112 and/or the processor(s) 120 may execute the instructions 800 to implement block 714 of FIG. 7. The example instructions 800 enter from block 712 of FIG. 7, in response to the detecting that the output voltage is less than a threshold output voltage. The instructions 800 will be described below with reference to the system 100 of FIG. 1 and the example short circuit event 206 of FIG. 2.

During execution of the instructions 800, the control circuitry 112 continues to monitor the output voltage 302 to determine whether the short circuit event 306 has ended based on whether the output voltage 302 has increased above the threshold voltage 308. At any point during the example instructions 800, the control circuitry 112 may end execution of the instructions 800 in response to determining the output voltage 302 is greater than the threshold voltage 308. While the output voltage 302 remains below the threshold voltage 308, the control circuitry 112 controls the power conversion circuitry 110 according to a series of states to rapidly increase the output current 304 and then decrease the output current 304 to reduce spatter generated by clearing the short circuit.

At block 802, in response to determining that the output voltage 302 of the power conversion circuitry 110 is less than a threshold voltage 308, the control circuitry 112 controls the power conversion circuitry 110 to output the welding-type power based on a target current for a wetting time period. For example, the control circuitry 112 may enter the wetting state 224 in response to first detecting the short circuit event 206. At block 804, the control circuitry 112 determines whether the wetting time period has expired. For example, the control circuitry 112 may monitor a watchdog or other timer to determine when the wetting period has expired. If the wetting time period has not expired (block 804), control returns to block 802 to continue controlling the power conversion circuitry 110 in the wetting state.

When the wetting time period has expired (block 804), at block 806 the control circuitry 112 enters the peak short circuit response state 210 and sets a first value of a control parameter to increase a response rate of the voltage-controlled control loop. For example, the control circuitry 112 may set a value of one or more parameters such as a slope parameter, a voltage command or commanded output voltage, an output current limit, an inductance parameter (e.g., a limit on a rate of change of output current per unit time), and/or any other applicable parameters.

At block 808, the control circuitry 112 controls the power conversion circuitry 110 using the voltage-controlled control loop and the first value of the control parameter. At block 810, the control circuitry 112 determines whether the peak short circuit response state 210 is ended. For example, the control circuitry 112 may end the peak short circuit response state 210 after a predetermined time period and/or in response to the current satisfying a threshold current (e.g., reaching a target current or upper threshold output current 212). If the peak short circuit response state 210 is not ended (block 810), control returns to block 808 to continue controlling the power conversion circuitry 110 using the first value of the control parameter.

When the peak short circuit response state 210 has ended (block 810), at block 812 the control circuitry 112 enters a current reduction state 214 and sets the control parameter to a second value to reduce an energy output relative to the peak short circuit response state 210. At block 814, the control circuitry 112 controls the power conversion circuitry 110 using the voltage-controlled control loop and the second value of the control parameter.

At block 816, the control circuitry 112 determines whether the current reduction state 214 has ended. For example, the control circuitry 112 may end the current reduction state 214 after a time duration and/or in response to the current satisfying a lower threshold output current 216. If the current reduction state 214 has not ended (block 816), at block 818 the control circuitry 112 adjusts the value of the control parameter to further reduce the energy output. For example, the control circuitry 112 may repeatedly reduce the energy output as the current reduction state 214 goes on to reduce the current as the likelihood of clearing the short circuit at a given moment increases, while having a higher current at the beginning of the current reduction state 214 to reduce the time needed to clear the short circuit. After adjusting the value of the control parameter (block 818), control returns to block 814.

Turning to FIG. 8B, when the current reduction state 214 has ended (block 816), at block 820 the control circuitry 112 enters the low energy state 220 and sets the control parameter to a third value to reduce an energy output relative to the current reduction state 214.

At block 822, the control circuitry 112 controls the power conversion circuitry 110 using the voltage-controlled control loop and the third value of the control parameter. At block 824, the control circuitry 112 determines whether a threshold time has expired. For example, the control circuitry 112 may sustain the low energy state 220 for a time duration (e.g., measured from the end of the current reduction state 214) based on an expected duration of the short circuit. If the threshold time has not expired (block 824), control returns to block 820.

When the threshold time expires (block 824), at block 826 the control circuitry 112 enters the extended short state 222 and sets the control parameter to a fourth value to increase an energy output relative to the low energy state 220. For example, when the short circuit is longer than the expected duration, or longer than the expected duration and an additional duration provided to handle short circuits that are only slightly longer than expected, the control circuitry 112 increases the energy output to clear the short circuit despite the potential for increased spatter.

At block 828, the control circuitry 112 controls the power conversion circuitry 110 using the voltage-controlled control loop and the fourth value of the control parameter. At block 828, the control circuitry 112 determines whether the output voltage 202 is greater than the threshold voltage 208. If the output voltage 202 is not greater than the threshold voltage 208 (block 830), at block 832 the control circuitry 112 adjusts the fourth value of the control parameter to further increase the energy output. For example, the control circuitry 112 may repeatedly increase the energy output during the extended short state 222 to clear the short circuit.

If the output voltage 202 is greater than the threshold voltage 208 (block 830), the example instructions 800 end and control returns to block 706 of FIG. 7. In some examples, if the output voltage 202 is not greater than the threshold voltage 208 for at least a threshold time (block 830), a watchdog or other timer may shut down the welding process.

While the description of the example instructions 800 refers to a control parameter, the control circuitry 112 may adjust one or more same control parameters and/or one or more different control parameters between the peak short circuit response state 210, the current reduction state 214, the low energy state 220, and/or the extended short state 222 to achieve the result of quickly clearing the short circuit with low spatter using a voltage-controlled control loop.

The present devices and/or methods may be realized in hardware, software, or a combination of hardware and software. The present methods and/or systems may be realized in a centralized fashion in at least one computing system, processors, and/or other logic circuits, or in a distributed fashion where different elements are spread across several interconnected computing systems, processors, and/or other logic circuits. Any kind of computing system or other apparatus adapted for carrying out the methods described herein is suited. A typical combination of hardware and software may be a processing system integrated into a welding power supply with a program or other code that, when being loaded and executed, controls the welding power supply such that it carries out the methods described herein. Another typical implementation may comprise an application specific integrated circuit or chip such as field programmable gate arrays (FPGAs), a programmable logic device (PLD) or complex programmable logic device (CPLD), and/or a system-on-a-chip (SoC). Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine readable medium" is defined to include all types of machine readable storage media and to exclude propagating signals.

While the present method and/or system has been described with reference to certain implementations, it will be understood by those skilled in the art that various changes may be made and equivalents may be substituted without departing from the scope of the present invention as defined in the appended claims.

**Claims**

1. A welding-type power supply (102), comprising:

   power conversion circuitry (110) configured to convert input power to welding-type power; and
   a voltage sensor;
   the welding-type power supply (102) being **characterised by** control circuitry (112) configured to:

   control the power conversion circuitry (110) to output the welding-type power based on a voltage-controlled control loop;
   monitor, via the voltage sensor, an output voltage (202) of the power conversion circuitry; and
   in response to detecting the output voltage (202) less than a threshold voltage (208):

   during a first state, control the voltage-controlled control loop based on a first value of a control parameter of the voltage-controlled control loop to increase a response rate of the voltage-controlled control loop; and
   during a second state following the first state, control the voltage-controlled control loop based on a second value of the control parameter, wherein the second value of the control parameter causes a reduction in energy output by the power conversion circuitry (110) relative to the first state;

   wherein the control circuitry (112) is configured to increase an output current (204) of the power conversion circuitry (110) at least a threshold amount in less than a threshold time during a short circuit condition occurring during the first state, and decrease the output current (204) during the second state to reduce an amount of spatter occurring when the short circuit condition clears.

2. The welding-type power supply (102) as defined in claim 1, wherein the control circuitry (112) is configured to repeatedly adjust the value of the control parameter during the second state to cause the voltage-controlled control loop to repeatedly reduce the energy output by the power conversion circuitry (110).

3. The welding-type power supply (102) as defined in claim 1, wherein the control circuitry (112) is configured to, in response to detecting the output voltage (202) that is less than the threshold voltage (208):

   prior to the first state, controlling the power conversion circuitry (110) to output the welding-type power based on a target current for a threshold wetting time period; and
   after the threshold wetting time period, enter the first state if the output voltage (202) is still less than the threshold voltage (208).

4. The welding-type power supply (102) as defined in claim 1, wherein the control circuitry (112) is configured to, during either of the first state or the second state, set the value of the control parameter to a predetermined value in response to detecting that the output voltage (202) is at least the threshold voltage (208).

5. The welding-type power supply (102) as defined in claim 1, wherein the control circuitry (112) is configured to, during a third state following the second state, control the voltage-controlled control loop based on a third value of the control parameter, wherein the third value of the control parameter causes a lower energy output by the power conversion circuitry (110) than the first and second values.

6. The welding-type power supply (102) as defined in claim 5, wherein the control circuitry (112) is configured to, in response to detecting that the output voltage (202) is less than the threshold voltage (208) at an end of the third state, adjust the value of the control parameter to cause a higher output energy than the third state.

7. The welding-type power supply (102) as defined in claim 1, wherein the control parameter comprises a slope parameter that specifies the adjustment to a commanded output voltage (202) of the voltage-controlled control loop per unit of output current (204).

8. The welding-type power supply (102) as defined in claim 1, wherein the control parameter comprises a voltage command, and the control circuitry (112) is configured to set a commanded output voltage (202) of the voltage-controlled control loop to be equal to the voltage command.

9. The welding-type power supply (102) as defined in claim 1, wherein the control parameter comprises an upper limit on a rate of change of output current (204) per unit time.

10. The welding-type power supply (102) as defined in claim 1, wherein the control parameter comprises an upper limit on an output current (204) by the power conversion circuitry (110).

11. The welding-type power supply (102) as defined in claim 1, wherein the control circuitry (112) is configured to control the power conversion circuitry (110) in the first state for a first time period and control the power conversion circuitry (110) in the second state for a second time period.

12. The welding-type power supply (102) as defined in claim 11, wherein the control circuitry (112) is configured to:

   predict a time at which the output voltage (202) is to increase above the threshold voltage (208);
   compare an observed time at which the output voltage (202) is to increase above the threshold voltage (208) to the predicted time; and
   adjust at least one of the first value of the control parameter or the second value of the control parameter based on the comparison.

13. A method to control a welding-type power supply (102), comprising:

   controlling, via control circuitry (112), power conversion circuitry (110) to convert input power to welding-type power based on a voltage-controlled control loop; and
   monitoring, via a voltage sensor, an output voltage (202) of the power conversion circuitry (110);
   the method being **characterised by**:
   in response to detecting that the output voltage (202) is less than a threshold voltage (208):

during a first state, controlling the voltage-controlled control loop based on a first value of a control parameter of the voltage-controlled control loop to increase a response rate of the voltage-controlled control loop; and during a second state following the first state, controlling the voltage-controlled control loop based on a second value of the control parameter, wherein the second value of the control parameter causes a reduction in energy output by the power conversion circuitry (110) relative to the first state; wherein the control circuitry (112) is configured to increase an output current (204) of the power conversion circuitry (110) at least a threshold amount in less than a threshold time during a short circuit condition occurring during the first state, and decrease the output current (204) during the second state to reduce an amount of spatter occurring when the short circuit condition clears.

14. A non-transitory machine readable storage medium comprising machine readable instructions which, when executed by a logic circuit, cause the logic circuit to at least:

control power conversion circuitry (110) to convert input power to welding-type power based on a voltage-controlled control loop;
monitor, via a voltage sensor, an output voltage (202) of the power conversion circuitry (110); and
in response to detecting that the output voltage (202) is less than a threshold voltage (208):

during a first state, control the voltage-controlled control loop based on a first value of a control parameter of the voltage-controlled control loop to increase a response rate of the voltage-controlled control loop; and during a second state following the first state, control the voltage-controlled control loop based on a second value of the control parameter, wherein the second value of the control parameter causes a reduction in energy output by the power conversion circuitry (110) relative to the first state; wherein the control circuitry (112) is configured to increase an output current (204) of the power conversion circuitry (110) at least a threshold amount in less than a threshold time during a short circuit condition occurring during the first state, and decrease the output current (204) during the second state to reduce an amount of spatter occurring when the short circuit condition clears.

**Patentansprüche**

1. Schweißstromversorgung (102), aufweisend:

eine Leistungsumwandlungsschaltung (110), die so konfiguriert ist, dass sie Eingangsleistung in Schweißleistung umwandelt; und
einen Spannungssensor;
wobei die Schweißstromversorgung (102) durch eine Steuerschaltung (112) gekennzeichnet ist, die so konfiguriert ist, dass:

sie die Leistungsumwandlungsschaltung (110) so steuert, dass sie die Schweißleistung basierend auf einem spannungsgesteuerten Regelkreis abgibt;
über den Spannungssensor eine Ausgangsspannung (202) der Leistungsumwandlungsschaltung überwacht; und
in Reaktion auf das Erkennen der Ausgangsspannung (202), die kleiner als eine Schwellenspannung (208) ist:

während eines ersten Zustands den spannungsgesteuerten Regelkreis basierend auf einem ersten Wert eines Steuerparameters des spannungsgesteuerten Regelkreises steuert, um eine Ansprechrate des spannungsgesteuerten Regelkreises zu erhöhen; und
während eines zweiten Zustands, der auf den ersten Zustand folgt, den spannungsgesteuerten Regelkreis basierend auf einem zweiten Wert des Steuerparameters steuert, wobei der zweite Wert des Steuerparameters eine Verringerung der Energieabgabe durch die Leistungsumwandlungsschaltung (110) relativ zu dem ersten Zustand bewirkt;

wobei die Steuerschaltung (112) so konfiguriert ist, dass sie einen Ausgangsstrom (204) der Leistungsumwandlungsschaltung (110) zumindest um einen Schwellenwert in weniger als einer Schwellenwertzeit während eines Kurzschlusszustands erhöht, der während des ersten Zustands auftritt, und den Ausgangsstrom (204) während des zweiten Zustands verringert, um eine Schweißspritzermenge zu verringern, die auftritt, wenn der Kurzschlusszustand nicht mehr besteht.

2. Schweißstromversorgung (102) nach Anspruch 1, wobei die Steuerschaltung (112) so konfiguriert ist, dass sie den Wert des Steuerparameters während des zweiten Zustands wiederholt so anpasst, dass er bewirkt, dass der spannungsgesteuerte Regelkreis wiederholt die Energieabgabe durch die Leistungsumwandlungsschaltung (110) verringert.

3. Schweißstromversorgung (102) nach Anspruch 1, wobei die Steuerschaltung (112) so konfiguriert ist, dass sie in Reaktion auf das Erfassen der Ausgangsspannung (202), die kleiner als die Schwellenspannung (208) ist:

   vor dem ersten Zustand die Leistungsumwandlungsschaltung (110) so steuert, dass sie die Schweißleistung basierend auf einem Zielstrom während eines Schwellenbenetzungszeitraums abgibt; und
   nach dem Schwellenbenetzungszeitraum in den ersten Zustand eintritt, wenn die Ausgangsspannung (202) immer noch kleiner als die Schwellenspannung (208) ist.

4. Schweißstromversorgung (102) nach Anspruch 1, wobei die Steuerschaltung (112) so konfiguriert ist, dass sie, während entweder des ersten Zustands oder des zweiten Zustands, den Wert des Steuerparameters in Reaktion auf das Erfassen, dass die Ausgangsspannung (202) zumindest der Schwellenspannung (208) entspricht, auf einen vorbestimmten Wert einstellt.

5. Schweißstromversorgung (102) nach Anspruch 1, wobei die Steuerschaltung (112) so konfiguriert ist, dass sie, während eines dritten Zustands, der dem zweiten Zustand folgt, den spannungsgesteuerten Regelkreis basierend auf einem dritten Wert des Steuerparameters steuert, wobei der dritte Wert des Steuerparameters eine geringere Energieabgabe durch die Leistungsumwandlungsschaltung (110) bewirkt als der erste und der zweite Wert.

6. Schweißstromversorgung (102) nach Anspruch 5, wobei die Steuerschaltung (112) so konfiguriert ist, dass sie in Reaktion auf das Erfassen, dass die Ausgangsspannung (202) kleiner als die Schwellenspannung (208) an einem Ende des dritten Zustands ist, den Wert des Steuerparameters so anpasst, dass er eine höhere Energieabgabe als der dritte Zustand bewirkt.

7. Schweißstromversorgung (102) nach Anspruch 1, wobei der Steuerparameter einen Steilheitsparameter aufweist, der die Anpassung an eine Soll-Ausgangsspannung (202) des spannungsgesteuerten Regelkreises pro Einheit des Ausgangsstroms (204) spezifiziert.

8. Schweißstromversorgung (102) nach Anspruch 1, wobei der Steuerparameter einen Spannungsbefehl aufweist und die Steuerschaltung (112) so konfiguriert ist, dass sie eine Soll-Ausgangsspannung (202) des spannungsgesteuerten Regelkreises so einstellt, dass sie dem Spannungsbefehl entspricht.

9. Schweißstromversorgung (102) nach Anspruch 1, wobei der Steuerparameter eine Obergrenze einer Änderungsrate des Ausgangsstroms (204) pro Zeiteinheit aufweist.

10. Schweißstromversorgung (102) nach Anspruch 1, wobei der Steuerparameter eine Obergrenze eines Ausgangsstroms (204) durch die Leistungsumwandlungsschaltung (110) aufweist.

11. Schweißstromversorgung (102) nach Anspruch 1, wobei die Steuerschaltung (112) so konfiguriert ist, dass sie die Leistungsumwandlungsschaltung (110) in dem ersten Zustand während eines ersten Zeitraums steuert und die Leistungsumwandlungsschaltung (110) in dem zweiten Zustand während eines zweiten Zeitraums steuert.

12. Schweißstromversorgung (102) nach Anspruch 11, wobei die Steuerschaltung (112) so konfiguriert ist, dass sie:

    einen Zeitpunkt vorhersagt, zu dem die Ausgangsspannung (202) über die Schwellenspannung (208) erhöht werden soll;
    einen beobachteten Zeitpunkt, zu dem die Ausgangsspannung (202) über die Schwellenspannung (208) erhöht werden soll, mit dem vorhergesagten Zeitpunkt vergleicht; und
    zumindest eines aus dem ersten Wert des Steuerparameters oder dem zweiten Wert des Steuerparameters basierend auf dem Vergleich anpasst.

13. Verfahren zum Steuern einer Schweißstromversorgung (102), aufweisend:

das Steuern, über eine Steuerschaltung (112), der Leistungsumwandlungsschaltung (110), um diese Eingangsleistung basierend auf einem spannungsgesteuerten Regelkreis in Schweißleistung umzuwandeln; und

das Überwachen, über einen Spannungssensor, einer Ausgangsspannung (202) der Leistungsumwandlungsschaltung (110);

wobei das Verfahren **gekennzeichnet ist durch**:

in Reaktion auf das Erkennen der Ausgangsspannung (202), die kleiner als eine Schwellenspannung (208) ist:

während eines ersten Zustands, das Steuern des spannungsgesteuerten Regelkreises basierend auf einem ersten Wert eines Steuerparameters des spannungsgesteuerten Regelkreises, um eine Ansprechrate des spannungsgesteuerten Regelkreises zu erhöhen; und

während eines zweiten Zustands, der auf den ersten Zustand folgt, das Steuern des spannungsgesteuerten Regelkreises basierend auf einem zweiten Wert des Steuerparameters steuert, wobei der zweite Wert des Steuerparameters eine Verringerung der Energieabgabe **durch** die Leistungsumwandlungsschaltung (110) relativ zu dem ersten Zustand bewirkt;

wobei die Steuerschaltung (112) so konfiguriert ist, dass sie einen Ausgangsstrom (204) der Leistungsumwandlungsschaltung (110) um zumindest einen Schwellenwert in weniger als einer Schwellenwertzeit während eines Kurzschlusszustands erhöht, der während des ersten Zustands auftritt, und den Ausgangsstrom (204) während des zweiten Zustands verringert, um eine Schweißspritzermenge zu verringern, die auftritt, wenn der Kurzschlusszustand nicht mehr besteht.

14. Nichtflüchtiges maschinenlesbares Speichermedium, das maschinenlesbare Anweisungen aufweist, die, wenn sie von einer Logikschaltung ausgeführt werden, bewirken, dass die Logikschaltung zumindest:

eine Leistungsumwandlungsschaltung (110) so steuert, dass sie Eingangsleistung basierend auf einem spannungsgesteuerten Regelkreis in Schweißleistung umwandelt;

eine Ausgangsspannung (202) der Leistungsumwandlungsschaltung (110) über einen Spannungssensor überwacht; und

in Reaktion auf das Erfassen, dass die Ausgangsspannung (202) kleiner als eine Schwellenspannung (208) ist:

während eines ersten Zustands den spannungsgesteuerten Regelkreis basierend auf einem ersten Wert eines Steuerparameters des spannungsgesteuerten Regelkreises so steuert, dass er eine Ansprechrate des spannungsgesteuerten Regelkreises erhöht; und

während eines zweiten Zustands, der auf den ersten Zustand folgt, den spannungsgesteuerten Regelkreis basierend auf einem zweiten Wert des Steuerparameters steuert, wobei der zweite Wert des Steuerparameters eine Verringerung der Energieabgabe durch die Leistungsumwandlungsschaltung (110) relativ zu dem ersten Zustand bewirkt;

wobei die Steuerschaltung (112) so konfiguriert ist, dass sie einen Ausgangsstrom (204) der Leistungsumwandlungsschaltung (110) um zumindest einen Schwellenwert in weniger als einer Schwellenwertzeit während eines Kurzschlusszustands erhöht, der während des ersten Zustands auftritt, und

den Ausgangsstrom (204) während des zweiten Zustands verringert, um eine Schweißspritzermenge zu reduzieren, die auftritt, wenn der Kurzschlusszustand nicht mehr besteht.


## Revendications

1. Alimentation électrique de type soudage (102), comprenant :

un circuit de conversion de puissance (110) configuré pour convertir une puissance d'entrée en une puissance de type soudage ; et

un capteur de tension ;

l'alimentation électrique de type soudage (102) étant **caractérisée par** un circuit de commande (112) configuré pour :

commander le circuit de conversion de puissance (110) pour délivrer la puissance de type soudage sur la base d'une boucle de commande commandée en tension ;

surveiller, via le capteur de tension, une tension de sortie (202) du circuit de conversion de puissance ; et

en réponse à la détection de la tension de sortie (202) inférieure à une tension seuil (208) :

durant un premier état, commander la boucle de commande commandée en tension sur la base d'une première valeur d'un paramètre de commande de la boucle de commande commandée en tension pour augmenter un taux de réponse de la boucle de commande commandée en tension ; et
durant un deuxième état suivant le premier état, commander la boucle de commande commandée en tension sur la base d'une deuxième valeur du paramètre de commande, dans lequel la deuxième valeur du paramètre de commande amène une réduction de la sortie d'énergie par le circuit de conversion de puissance (110) par rapport au premier état ;

dans lequel le circuit de commande (112) est configuré pour augmenter un courant de sortie (204) du circuit de conversion de puissance (110) au moins d'une quantité seuil en moins d'un temps seuil durant une condition de court-circuit se produisant durant le premier état, et diminuer le courant de sortie (204) durant le deuxième état pour réduire une quantité de projections se produisant lorsque la condition de court-circuit disparait.

2. Alimentation électrique de type soudage (102) selon la revendication 1, dans laquelle le circuit de commande (112) est configuré pour ajuster de manière répétée la valeur du paramètre de commande durant le deuxième état pour amener la boucle de commande commandée en tension à réduire de manière répétée la sortie d'énergie par le circuit de conversion de puissance (110).

3. Alimentation électrique de type soudage (102) selon la revendication 1, dans laquelle le circuit de commande (112) est configuré pour, en réponse à la détection de la tension de sortie (202) qui est inférieure à la tension seuil (208) :

avant le premier état, la commande du circuit de conversion de puissance (110) pour délivrer la puissance de type soudage sur la base d'un courant cible pour une période de temps de mouillage seuil ; et
après la période de temps de mouillage seuil, entrer le premier état si la tension de sortie (202) est encore inférieure à la tension seuil (208).

4. Alimentation électrique de type soudage (102) selon la revendication 1, dans laquelle le circuit de commande (112) est configuré pour, durant le premier état ou le deuxième état, définir la valeur du paramètre de commande à une valeur prédéterminée en réponse à la détection que la tension de sortie (202) est au moins la tension seuil (208).

5. Alimentation électrique de type soudage (102) selon la revendication 1, dans laquelle le circuit de commande (112) est configuré pour, durant un troisième état suivant le deuxième état, commander la boucle de commande commandée en tension sur la base d'une troisième valeur du paramètre de commande, dans laquelle la troisième valeur du paramètre de commande amène une sortie d'énergie inférieure par le circuit de conversion de puissance (110) aux première et deuxièmes valeurs.

6. Alimentation électrique de type soudage (102) selon la revendication 5, dans laquelle le circuit de commande (112) est configuré pour, en réponse à la détection que la tension de sortie (202) est inférieure à la tension seuil (208) à une fin du troisième état, ajuster la valeur du paramètre de commande pour amener une énergie de sortie supérieure au troisième état.

7. Alimentation électrique de type soudage (102) selon la revendication 1, dans laquelle le paramètre de commande comprend un paramètre de variation qui spécifie l'ajustement à une tension de sortie commandée (202) de la boucle de commande commandée en tension par unité de courant de sortie (204).

8. Alimentation électrique de type soudage (102) selon la revendication 1, dans laquelle le paramètre de commande comprend une commande de tension, et le circuit de commande (112) est configuré pour définir une tension de sortie commandée (202) de la boucle de commande commandée en tension afin qu'elle soit égale à la commande de tension.

9. Alimentation électrique de type soudage (102) selon la revendication 1, dans laquelle le paramètre de commande comprend une limite supérieure sur un taux de variation du courant de sortie (204) par unité de temps.

10. Alimentation électrique de type soudage (102) selon la revendication 1, dans laquelle le paramètre de commande comprend une limite supérieure sur un courant de sortie (204) par le circuit de conversion de puissance (110).

11. Alimentation électrique de type soudage (102) selon la revendication 1, dans laquelle le circuit de commande (112) est configuré pour commander le circuit de conversion de puissance (110) dans le premier état pendant une première période de temps et commander le circuit de conversion de puissance (110) dans le deuxième état pendant une deuxième période de temps.

**12.** Alimentation électrique de type soudage (102) selon la revendication 11, dans laquelle le circuit de commande (112) est configuré pour :

prédire un moment auquel la tension de sortie (202) doit augmenter au-dessus de la tension seuil (208) ;
comparer un moment observé auquel la tension de sortie (202) doit augmenter au-dessus de la tension seuil (208) au moment prédit ; et
ajuster au moins une parmi la première valeur du paramètre de commande ou la deuxième valeur du paramètre de commande sur la base de la comparaison.

**13.** Procédé pour commander une alimentation électrique de type soudage (102), comprenant :

la commande, via un circuit de commande (112), d'un circuit de conversion de puissance (110) pour convertir une puissance d'entrée en une puissance de type soudage sur la base d'une boucle de commande commandée en tension ; et
la surveillance, via un capteur de tension, d'une tension de sortie (202) du circuit de conversion de puissance (110) ;
le procédé étant **caractérisé par** :
en réponse à la détection que la tension de sortie (202) est inférieure à une tension seuil (208) :

durant un premier état, la commande de la boucle de commande commandée en tension sur la base d'une première valeur d'un paramètre de commande de la boucle de commande commandée en tension pour augmenter un taux de réponse de la boucle de commande commandée en tension ; et
durant un deuxième état suivant le premier état, la commande de la boucle de commande commandée en tension sur la base d'une deuxième valeur du paramètre de commande, dans lequel la deuxième valeur du paramètre de commande amène une réduction de la sortie d'énergie par le circuit de conversion de puissance (110) par rapport au premier état ;
dans lequel le circuit de commande (112) est configuré pour augmenter un courant de sortie (204) du circuit de conversion de puissance (110) d'au moins une quantité seuil en moins d'un temps seuil durant une condition de court-circuit se produisant durant le premier état, et diminuer le courant de sortie (204) durant le deuxième état pour réduire une quantité de projections se produisant lorsque l'état de court-circuit disparait.

**14.** Dispositif de stockage lisible par machine non transitoire comprenant des instructions lisibles par machine qui, lorsqu'elles sont exécutées, amènent le circuit logique à au moins :

commander le circuit de conversion de puissance (110) pour convertir une puissance d'entrée en une puissance de type soudage sur la base d'une boucle de commande commandée en tension ;
surveiller, via un capteur de tension, une tension de sortie (202) du circuit de conversion de puissance (110) ; et
en réponse à la détection que la tension de sortie (202) est inférieure à une tension seuil (208) :

durant un premier état, commander la boucle de commande commandée en tension sur la base d'une première valeur d'un paramètre de commande de la boucle de commande commandée en tension pour augmenter un taux de réponse de la boucle de commande commandée en tension ; et

durant un deuxième état suivant le premier état, commander la boucle de commande commandée en tension sur la base d'une deuxième valeur du paramètre de commande, dans lequel la deuxième valeur du paramètre de commande amène une réduction de la sortie d'énergie par le circuit de conversion de puissance (110) par rapport au premier état ;
dans lequel le circuit de commande (112) est configuré pour augmenter un courant de sortie (204) du circuit de conversion de puissance (110) d'au moins une quantité seuil en moins d'un temps seuil durant un état de court-circuit se produisant durant le premier état, et

la diminution du courant de sortie (204) durant le deuxième état pour réduire une quantité de projections se produisant lorsque la condition de court-circuit disparait.

FIG. 1

EP 3 865 241 B1

FIG. 2

FIG. 3

FIG. 4

FIG. 5

FIG. 6

700 ⌐

```
                        ╭─────────────────────╮
                        │        Start        │
                        ╰─────────────────────╯
                                   │
    ┌──────────────────────────────┼──────────────────────────────────┐
    │                              │                                   │
    │  702 ⌐    ⟨          Received target voltage?          ⟩         │
    │      NO ╱                     │                                   │
    │        │                    YES                                  │
    │  704 ⌐ │   ┌─────────────────────────────────────────┐          │
    │        │   │ Set target voltage of voltage-controlled │          │
    │        │   │ control loop based on                    │──────────┘
    │        │   │ the received target voltage              │
    │        │   └─────────────────────────────────────────┘
    │        │                     │
    │        │                     ▼
    │  706 ⌐ │   ⟨           Welding occurring?            ⟩
    │      NO╱                      │
    └────────                     YES
       708 ⌐    ┌─────────────────────────────────────────────────┐
                │ Control, via voltage-controlled control loop,   │
                │ power conversion                                │
                │ circuitry to convert input power to welding-    │
                │ type power                                      │
                └─────────────────────────────────────────────────┘
                                   │
                                   ▼
       710 ⌐    ┌─────────────────────────────────────────────────┐
                │           Measure output voltage                │
                └─────────────────────────────────────────────────┘
                                   │
                                   ▼
       712 ⌐    ⟨     Is output voltage < threshold voltage?     ⟩──── NO ──►
                                   │
                                 YES
       714 ⌐    ┌─────────────────────────────────────────────────┐
                │ Control power conversion circuitry to clear     │
                │ short-circuit                                   │
                │ condition by controlling control parameter(s)   │
                │ of the voltage-                                 │
                │ controlled control loop                         │
                └─────────────────────────────────────────────────┘
```

FIG. 7

800

**Short-Circuit Clearing Process**

802 — Control power conversion circuitry to output the welding-type power based on a target current for a wetting time period

804 — Wetting time period expired?   NO

YES

806 — Enter peak short circuit response state and set control parameter to first value to increase a response rate of the voltage-controlled control loop

808 — Control power conversion circuitry using the voltage-controlled control loop and the first value of the control parameter

810 — Peak short circuit response state ended?   NO

YES

812 — Enter current reduction state and set control parameter to second value to reduce an energy output relative to the peak short circuit response state

814 — Control power conversion circuitry using the voltage-controlled control loop and the second value of the control parameter

816 — Current reduction state ended?

YES                      NO

818 — Adjust the second value of control parameter to reduce the energy output

A

FIG. 8A

800

A

820 — Enter low energy state and set control parameter to a third value to reduce an energy output relative to the current reduction state

822 — Control power conversion circuitry using the voltage-controlled control loop and the third value of the control parameter

824 — Threshold time expired?

YES / NO

826 — Enter extended short state and set control parameter to a fourth value to increase an energy output relative to the low energy state

828 — Control power conversion circuitry using the voltage-controlled control loop and the fourth value of the control parameter

830 — Output voltage > threshold?

YES / NO

832 — Adjust the fourth value of the control parameter to increase the energy output

Return

FIG. 8B

**EP 3 865 241 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019388992 A1
- US 20080223840 A1
- US 9012807 B